# EUROPÄISCHE PATENTSCHRIFT

(11) **EP 1 964 229 B1**
(45) Veröffentlichungstag und Bekanntmachung des Hinweises auf die Patenterteilung: **13.01.2016**
(21) Anmeldenummer: 06807193.5
(22) Anmeldetag: 12.10.2006
(51) Int. Cl.: H02H 7/085

(54) **VERFAHREN UND VORRICHTUNG ZUM EINKLEMMSCHUTZ FÜR EIN MOTORBETRIEBENES SCHLIEßSYSTEM**
PINCH PROTECTION METHOD AND DEVICE FOR A MOTOR-DRIVEN CLOSING SYSTEM
PROCEDE ET DISPOSITIF ANTIBLOCAGE POUR SYSTEME DE FERMETURE COMMANDE PAR UN MOTEUR

(30) Priorität: 16.12.2005 DE 102005060325
(43) Veröffentlichungstag der Anmeldung: 03.09.2008
(73) Patentinhaber: ROBERT BOSCH GMBH, 70442 Stuttgart (DE)
(72) Erfinder: PRUESSEL, Holger, 77830 Buehlertal (DE); BATEJAT, Fabien, F-67000 Strasbourg (FR)
(86) Internationale Anmeldenummer: PCT/EP2006/067326
(87) Internationale Veröffentlichungsnummer: WO 2007/071471

(56) Entgegenhaltungen:
- DE-A1-102005 006 093
- US-A1- 2003 137 265

## Beschreibung

### Stand der Technik

Die vorliegende Erfindung betrifft ein Verfahren und eine Vorrichtung zum Einklemmschutz für ein motorbetriebenes Schließsystem.

Motorgetriebene Schließsysteme mit elektrischen Antrieben werden in Kraftfahrzeugen insbesondere für Fensterhebe- und Schiebedachvorrichtungen eingesetzt. Auch für motorisch betriebene Heckklappenschließanlagen kommen Motoren und Schließsysteme zum Einsatz. Um die Gefährdung von Personen und die Beschädigung von Objekten zu vermeiden, müssen derartige Systeme über einen Einklemmschutz verfügen. Dazu muss eine Einklemmsituation zuverlässig erkannt werden.

Zum Erkennen einer Einklemmsituation wird beispielsweise der antreibende Motor über Schaltelemente gesteuert, die ihrerseits von einer Motorüberwachungsstufe beeinflusst werden. Dazu wird z.B. aus einem bestimmten statischen Motorstromwert ein Rücksetzsignal abgeleitet und aus einer zumindest zeitweisen zeitlichen Änderung des Motorstroms ein weiteres Rücksetzsignal. Bei dieser Anordnung wird eine statische und dynamische Motorstromüberwachung durchgerührt. Dadurch wird der Motor abgeschaltet oder dessen Drehrichtung umgekehrt, wenn etwa beim Auftreffen der Scheibe auf ein Hindernis eine schnelle Momentänderung bzw. Stromerhöhung auftritt. Dies geschieht auch, wenn der momentane Stromwert vergleichsweise gering ist. Der Motor wird aber auch dann abgeschaltet, wenn bei einem schleichenden Stromanstieg auf einen Wert nahe des Kurzschlussstroms eine weitere rasche Stromerhöhung nicht mehr möglich ist. Es werden also der statische Motorstrom und die zeitliche Änderung des Stroms zur Erkennung der Einklemmsituation ausgewertet.

Allgemein bekannt ist auch eine Drehzahlüberwachung des Motors durchzuführen, um eine Kraftbegrenzung und einen Einklemmschutz bei Verstellantrieben im Kraftfahrzeug zu gewährleisten. Die Drehzahlüberwachung wird beispielsweise mittels Hallsensoren vorgenommen, um schleichende oder abrupte Änderungen zu detektieren und notwendige Motorsteuersignale abzuleiten.

Eine Einklemmsituation wird im Stand der Technik auch aus der im Anker des Motors induzierten Spannung erkannt, wobei die induzierte Spannung aus der an den Motorklemmen anliegenden Spannung und dem im Motoranker fließenden Strom ermittelt wird.

Mit der US2003/137265A1 ist ein Einklemmschutzverfahren bekanntgeworden, bei dem in regelmäßigen Abständen die Bestromung des Elektromotors kurzzeitig unterbrochen wird, um eine elektromotorische Rückstellkraft des Ankers zu messen. Daraus wird die Motorgeschwindigkeit ermittelt, welche als Grundlage für die Detektion eines Einkemmfalles herangezogen wird.

### Vorteile der Erfindung

Das erfindungsgemäße Verfahren zum Einklemmschutz für ein motorbetriebenes Schließsystem mit den Merkmalen des Patentanspruchs 1 weist den Vorteil auf, dass es zum Erkennen einer Einklemmsituation zweistufig ausgebildet ist und damit besonders schnell, zuverlässig und sicher ein Einklemmen in dem Schließsystem verhindert. In einem ersten Schritt wird eine reduzierte Motorgeschwindigkeit sofort erkannt. Daraufhin wird der Motor ausgeschaltet, so dass sich die Motorgeschwindigkeit während des Ausschaltvorgangs weiter reduziert. Nun wird ein Sensorsignal zum Erkennen einer Einklemmsituation analysiert. Dabei wird entschieden, ob eine Einklemmsituation vorliegt. In einem weiteren Schritt wird der Motor in Abhängigkeit des Erkennens einer Einklemmsituation gesteuert. Vorteilhaft bei diesem Verfahren ist, dass schon beim Erkennen einer kleinen Abweichung der Motorgeschwindigkeit der Motor sofort ausgeschaltet wird. Damit wird der Motor abgebremst. Gleichzeitig verringert sich so das Moment bzw. die Kraft, die der Motor übertragen kann. Im nächsten Schritt wird während des Ausschaltvorgangs des Motors ein Sensorsignal ausgewertet, um zuverlässig eine Einklemmsituation zu erkennen. Dieses Verfahren hat den großen Vorteil, dass es besonders sicher ist, da der Motor sofort abgeschaltet wird. Der Schutz von Personen ist somit auf zuverlässige Weise gewährleistet.

Erfindungsgemäß wird nach dem Verfahren die Drehrichtung des Motors umgekehrt und die Motorgeschwindigkeit erhöht, wenn eine Einklemmsituation erkannt wird. In diesem Fall wird der Ausschaltvorgang des Motors dahingehend beschleunigt, dass die Motorgeschwindigkeit schnellstmöglich auf null reduziert und dann auf die Arbeitsgeschwindigkeit bzw. maximale Geschwindigkeit in der entgegengesetzten Drehrichtung gesteuert wird. Dadurch wird beim Erkennen einer Einklemmsituation die Scheibe des Fensters bzw. das Schiebedach wieder geöffnet, so dass die Gefahr einer Verletzung einer eingeklemmten Person oder die Beschädigung eines eingeklemmten Objekts reduziert wird.

Die Unteransprüche offenbaren bevorzugte Weiterbildungen der Erfindung.

Besonders vorteilhaft erweist sich eine Ausgestaltung des Verfahrens, bei dem die Einklemmsituation innerhalb einer vorbestimmten Zeitperiode tdec erkannt wird. Innerhalb dieser Zeitperiode wird die Analyse des Sensorsignals und die Entscheidung über das Vorliegen oder Nichtvorliegen einer Einklemmsituation getroffen. Die Motorsteuerung wird am Ende der Zeitperiode tdec vorgenommen.

Vorteilhafterweise ist die vorbestimmte Zeitperiode tdec kleiner als eine Zeitperiode tstop, in der der Motor zum Stillstand kommt. Der Motor bewegt sich also noch während die Entscheidung über das Vorliegen einer Einklemmsituation getroffen wird, das heißt der Motor ist noch nicht auf die Geschwindigkeit null abgebremst worden. Bevorzugterweise liegt die Zeitperiode tstop zwischen circa 5 bis 20 Millisekunden, je nach Anforderung und nationaler Norm. Zusätzlich kann auch das Motorgeräusch als zeitbegrenzendes Glied Einfluss auf die Zeitperiode nehmen. Die Zeitperiode tdec ist entsprechend kleiner und beträgt etwa ein Viertel der Zeitperiode tstop, d.h., sie liegt etwa zwischen 1,25 und 5 Millisekunden.

In einer bevorzugten Variante des erfindungsgemäßen Verfahrens wird zum Erkennen einer Einklemmsituation die Drehzahl des Motors erfasst und ausgewertet. Damit kann zum einen die Motorgeschwindigkeit festgestellt werden; zum anderen steht die Drehzahl als Sensorsignal zur Verfügung, das zum Erkennen der Einklemmsituation ausgewertet wird. Die Motordrehzahl kann entweder über Hallsensoren erfasst werden oder durch Messung des Motorstroms. Dabei werden die Rippel am Kollektor des Motors ausgewertet. Sobald ein erster Rippel auftritt, wird im ersten Schritt des erfindungsgemäßen Verfahrens die reduzierte Motorgeschwindigkeit erkannt und der Motor abgeschaltet. Zum Erkennen einer Einklemmsituation wird dann das Stromsignal des Motors bzw. die auftretenden Rippel weiter analysiert, so dass nach circa drei bis acht Rippeln eine zuverlässige Bewertung der Einklemmsituation vorgenommen werden kann.

Vorteilhafterweise wird zum Erkennen einer Einklemmsituation das Sensorsignal eines Überwachungssensors ausgewertet. Dieser Sensor kann als einzige Funktion die Überwachung und das Erkennen einer Einklemmsituation haben. Solche Sensoren können entweder am Motor angeordnet sein, der das Schließsystem antreibt. In diesem Fall wird die Geschwindigkeit, der Strom, die Kraft, das Moment oder die Spannung des antreibenden Motors über Sensoren detektiert. Alternativ kann ein Sensor auch beispielsweise an der zu schließenden Scheibe oder dem Schiebedach angeordnet sein und die Bewegung der Scheibe bzw. des Schiebedachs erfassen. Dazu könnten Infrarotsensoren oder optische Sensoren verwendet werden. Auch Ultraschallsensoren, kapazitive Sensoren oder Kontaktstreifen eignen sich als Grundlage zum Erkennen einer Einklemmsituation.

Bevorzugterweise wird nach dem erfindungsgemäßen Verfahren der Motor wieder eingeschaltet und mit der gleichen Drehrichtung betrieben, wenn erkannt wird, dass keine Einklemmsituation vorliegt. Ist also kein Objekt in dem Schließsystem eingeklemmt, wird der Motor wieder beschleunigt, so dass der Schließvorgang des Schiebedachs oder der Fensterscheibe fortgesetzt wird. Beispielsweise kann eine Reduzierung der Motorgeschwindigkeit des antreibenden Motors des Schließsystems dann auftreten, wenn das Fahrzeug über eine unebene Straße fährt und es zu Stößen kommt, die auf die Karosserie und damit auf das Schließsystem übertragen werden. In diesem Fall ist die Reduzierung der Motorgeschwindigkeit aber auf den einzelnen Stoß beschränkt, so dass durch Auswertung des Sensorsignals erkannt werden kann, dass keine Einklemmsituation

vorliegt. Da der Motor zum Zeitpunkt der Entscheidung über die Einklemmsituation sich noch in Schließrichtung bewegt, wird der Schließvorgang praktisch ohne Verzögerung fortgesetzt. Die Reduzierung der Motorgeschwindigkeit ist so gering, dass sie vom Fahrer bzw. den Fahrzeuginsassen nicht bemerkt wird. Dadurch wird trotz unebener Straße der Schließvorgang eines Fensterhebers bzw. des Schiebedachs auf komfortable Weise fortgeführt. Es wird somit zuverlässig vermieden, dass beispielsweise das Fenster ständig hoch und runter fährt, mur weil Stöße von der Fahrbahn auf die Fahrzeugkarosserie übertragen werden.

Besonders vorteilhaft wird im Falle, wenn keine Einklemmsituation vorliegt, das analysierte Sensorsignal herausgefiltert. Dadurch können bei unebenen Straßen wenn Mehrfachstöße auf die Karosserie ausgeführt werden, diese Störsignale eliminiert werden, so dass zur Beurteilung der Einklemmsituation diese Signale nicht mehr beachtet werden müssen. Dadurch wird das Erkennen einer Einklemmsituation zuverlässiger und schneller. Die Sicherheit für die Insassen bzw. für eingeklemmte Objekte bleibt erhalten. Bevorzugt wird nach dem Verfahren bei der Erkennung der Einklemmsituation die Kennalinie des Motors während der Abschaltung berücksichtigt. Im Normalfall wird zum Erkennen einer Einklemmsituation von einer relativ konstanten Motorgeschwindigkeit ausgegangen. Nach dem erfindungsgemäßen Verfahren wird der Motor jedoch während der Analyse der Sensorsignale zum Erkennen der Einklemmsituation abgebremst. Dadurch entsteht eine veränderte Kennlinie der Motorgeschwindigkeit. Diese Motorkennlinie stellt eine von der Arbeits- bzw. Maximalgeschwindigkeit des Motors zum Stillstand des Motors hin abfallende Kurve dar. Sie muss bei der Auswertung der Sensorsignale, insbesondere wenn der Motorstrom oder die in den Motor induzierte Spannung als Grundlage genommen wird, berücksichtigt werden. Damit wird die Zuverlässigkeit beim Erkennen der Einklemmsituation verbessert. Die Sicherheit des Schließsystems für Personen, insbesondere für Fahrzeuginsassen, wird dadurch deutlich erhöht.

Das erfindungsgemäße Verfahren zum Erkennen von Einklemmsituationen wird von einer Vorrichtung ausgerührt, die einen Motor, eine Erkennungseinheit, eine Steuereinheit und wenigstens einen Sensor umfasst. Der Sensor überdacht den die Vorrichtung antreibenden Motor. Das Sensorsignal wird von einer Erkennungseinheit ausgewertet. Dabei wird die Änderung der Motorgeschwindigkeit sowie eine Einklemmsituation durch Analyse des Sensorsignals erkannt. Nach Erkennen einer Einklemmsituation bzw. bei der Feststellung einer reduzierten Motorgeschwindigkeit veranlasst die Steuereinheit, dass der Motor abgebremst bzw. die Drehrichtung des Motors umgekehrt und die Motorgeschwindigkeit erhöht bzw. der Motor mit der gleichen Drehrichtung weiter betrieben wird. Da der Motor sofort abgebremst wird, also noch vor dem endgültigen Erkennen einer Einklemmsituation, wird das vom Motor aufgebrachte Moment bzw. die Kraft reduziert. Auf diese Weise können strenge normative Anforderungen mit einfachen und preiswerten elektronischen Komponenten realisiert werden.

Besonders bevorzugt ist der Motor der Vorrichtung zur Erkennung von Einklemmsituationen als Antrieb für eine Fensterhebe- oder Schiebedach- oder Heckklappenvorrichtung in Kraftfahrzeugen vorgesehen.

### Zeichnung

Die Erfindung wird nachfolgend anhand von bevorzugten Ausführungsbeispielen im Detail beschrieben. In der Zeichnung ist:
- Figur 1: ein Diagramm, in dem die Motorgeschwindigkeit wiedergegeben wird bei Anwendung des erfindungsgemäßen Verfahrens, wenn eine Einklemmsituation erkannt wird;
- Figur 2: ein Diagramm der Motorgeschwindigkeit im Falle, dass keine Einklemmsituation vorliegt;
- Figur 3: ein Ablaufdiagramm zur Darstellung des erfindungsgemäßen Verfahrens.

### Beschreibung der Ausführungsbeispiele

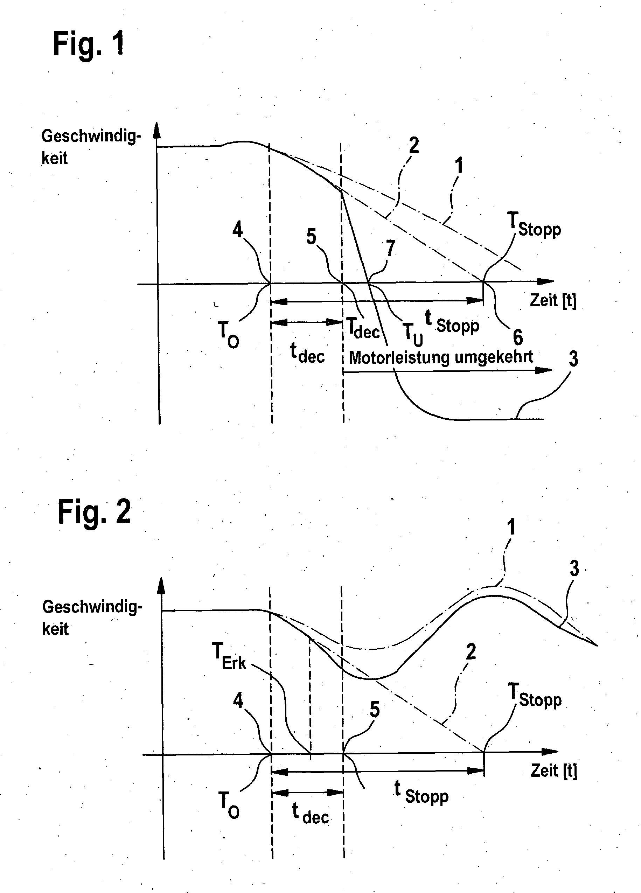

Nachfolgend wird unter Bezugnahme auf Figur 1 der Verlauf der Geschwindigkeit des Motors eines Fensterhebers über der Zeit erläutert. Figur 1 zeigt die Motorgeschwindigkeit bzw. die Drehzahl in unterschiedlichen Situationen, wenn sich ein Fahrzeug auf einer ebenen Straße befindet oder bewegt, wenn also keine Stöße o.ä. auf den Motor ausgeübt werden.

Eine gestrichelte Kurve 1 in Figur 1 zeigt den zeitlichen Abfall der Motorgeschwindigkeit aus der Arbeits- bzw. Maximalgeschwindigkeit, wenn zu einem Zeitpunkt T0, mit Bezugszeichen 4 bezeichnet, der Motor im normalen Betrieb ausgeschaltet wird. In diesem Fall wird beispielsweise ein Fensterheber in seine Endstellung gefahren oder vom Fahrzeuginsassen gestoppt.

Die Kurve 2 stellt den Verlauf der Motorgeschwindigkeit dar, wenn zu dem Zeitpunkt T0 eine Verringerung der Motorgeschwindigkeit erkannt, weil ein Objekt vom Fensterheber eingeklemmt ist. Der Motor wird darauf folgend abgeschaltet. Würde dieser Abschaltvorgang ohne Analyse der Sensorsignale zur Feststellung, ob eine Einklemmsituation vorliegt, fortgeführt werden, so würde zu einem Zeitpunkt Tstop, mit Bezugszeichen 6 bezeichnet, die Motorgeschwindigkeit auf null reduziert sein. Zu diesem Zeitpunkt würde der Stillstand des Motors eintreten. Die Kurve 2 verläuft mit einer größeren Steigung als die Kurve 1, weil der Motor in der Betriebsart "Einklemmschutz" durch das eingeklemmte Objekt zwischen Fensterscheibe und Fensterrahmen stärker abgebremst wird als im normalen Betrieb.

Die Kurve 3 aus Figur 1 zeigt den Verlauf der Motorgeschwindigkeit, wenn eine Einklemmsituation erkannt wird und der Motor gemäß dem erfindungsgemäßen Verfahren gesteuert wird. Zum Zeitpunkt T0, mit Bezugszeichen 4 bezeichnet, wird eine reduzierte Motorgeschwindigkeit erkannt und der Motor ausgeschaltet. Die Geschwindigkeit des Motors folgt dann der Kurve 2. Innerhalb einer Zeitperiode tdec ab dem Zeitpunkt T0, Bezugszeichen 4, wird dann entschieden, ob eine Einklemmsituation vorliegt. Zum Zeitpunkt Tdec, Bezugszeichen 5, wird beim Vorliegen einer Einklemmsituation die Motordrehrichtung umgekehrt und die Motorgeschwindigkeit wieder auf Maximalgeschwindigkeit erhöht. Damit folgt die Motorgeschwindigkeit der Kurve 3. Hierbei ist festzustellen, dass die Umkehr des Motors schon nach sehr kurzer Zeit, zum Zeitpunkt Tu, Bezugszeichen 7, erreicht wird.

Figur 2 zeigt ebenfalls den zeitlichen Verlauf der Motorgeschwindigkeit, jedoch für den Fall, dass Stöße auf den Motor von außen übertragen werden. Dies ist der Fall, wenn sich das Fahrzeug über eine unebene Straße bewegt oder beispielsweise über einen Bordstein fährt.

Die Kurve 1 zeigt hier den Fall, dass das Fahrzeug zum Zeitpunkt T0 (Bezugszeichen 4) z.B. einen Bordstein herauf fährt. Die auf das Fahrzeug wirkenden Stöße werden auf den Motor übertragen. Die Geschwindigkeit bzw. die Drehzahl des Motors wird dadurch beeinflusst, so dass die Geschwindigkeit des Motors der Kurve 1 folgt. Es liegt keine Einklemmsituation vor.

In Figur 2 ist der Fall dargestellt, dass im Zeitpunkt T0, Bezugszeichen 4, eine Reduzierung der Motorgeschwindigkeit erkannt wird. Daraufhin wird der Motor ausgeschaltet. Die Motorgeschwindigkeit folgt der Kurve 2. Innerhalb der Periode zwischen T0 und Tdec, Bezugszeichen 5, wird erkannt, dass keine Einklemmsituation vorliegt. In diesem Fall wird die Motorgeschwindigkeit sofort nach der Entscheidung, dass keine Einklemmsituation vorliegt, wieder erhöht. Die Motorgeschwindigkeit folgt ab dem Erkennungszeitpunkt TErk der Kurve 3 und nicht mehr der Kurve 2. Die Kurve 3 nimmt dann den prinzipiellen Verlauf der Kurve 1 an, da die auftretenden Stöße auch in dieser Situation auf den Motor übertragen werden.

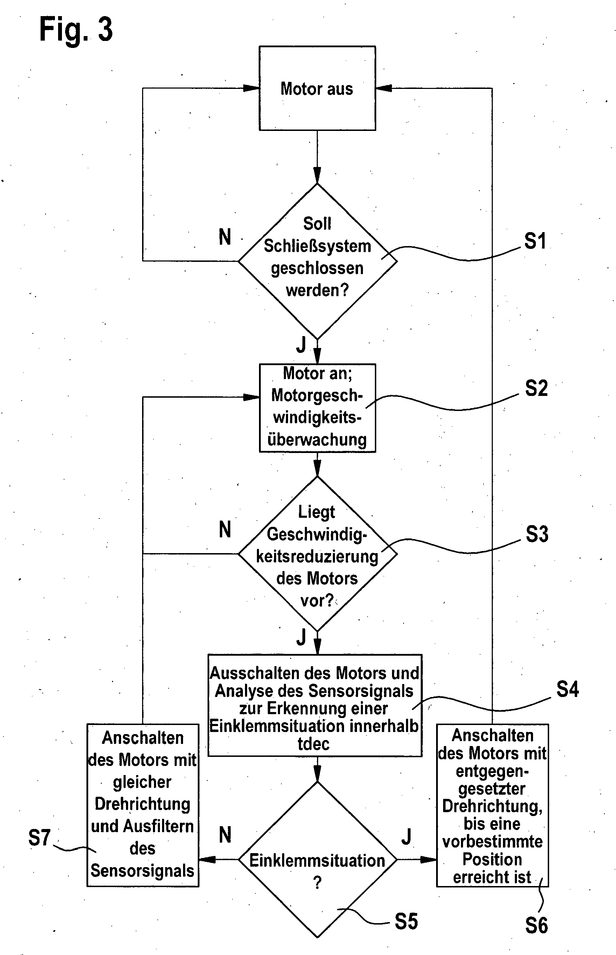

Figur 3 stellt ein Ablaufdiagramm dar, das die Motorsteuerung nach dem erfindungsgemäßen Verfahren beschreibt.

Ausgehend von dem ausgeschalteten Motor wird in einem Schritt S 1 erfragt, ob ein Schließsystem, beispielsweise ein Fensterheber geschlossen werden soll. Liegt kein derartiges Signal vor, bleibt der Motor ausgeschaltet.

Liegt die Anforderung zum Schließen des Schließsystems vor, wird im Schritt S 2 der Motor betrieben und gleichzeitig die Motorgeschwindigkeit überwacht. Gleichzeitig wird der Motor eingeschaltet und beginnt zu drehen. Im Schritt S 3 wird ermittelt, ob eine Reduzierung der Motorgeschwindigkeit vorliegt, insbesondere, ob eine nicht normale Reduzierung erkannt wird.

Wird keine Reduzierung der Motorgeschwindigkeit erkannt, geht der Ablauf zum Schritt S 2 zurück und die Motorgeschwindigkeit wird weiter überwacht.

Wird eine Reduzierung der Motorgeschwindigkeit im Schritt S 3 erkannt, so wird im Schritt S 4 der Motor ausgeschaltet und ein Sensorsignal zum Erkennen einer Einklemmsituation analysiert. Das Verfahren kann dabei schon bei kleinsten Abweichungen der Motorgeschwindigkeit bzw. der Drehzahl reagieren. Da der Motor sofort ausgeschaltet wird, wird die Drehzahl und das Moment des Motors reduziert. Auf Grundlage des Sensorsignals wird entschieden, ob eine Einklemmsituation vorliegt. Dies geschieht innerhalb der Zeitdauer tdec.

Im nächsten Schritt S5 wird entschieden, ob eine Einklemmsituation erkannt wird. Liegt eine Einklemmsituation vor, so wird im Schritt S 6 die Motordrehrichtung geändert und der Motor mit der umgekehrten Drehrichtung beschleunigt, bis er seine Maximalgeschwindigkeit erreicht hat. Sobald eine vordefinierte Position erreicht ist, also z.B. der Fensterheber die Fensterscheibe um eine vordefinierte Strecke nach unten bewegt hat, wird der Motor gestoppt. Dazu wird nach dem Ablaufdiagramm aus Figur 3 zurückverwiesen in die Position "Motor" aus".

Liegt im Schritt S 5 keine Einklemmsituation vor, bzw. wird entschieden, dass keine Einkiemmsituation vorliegt, so wird im Schritt S 7 die Motorgeschwindigkeit wieder erhöht und der Motor mit der gleichen Drehrichtung weiter gefahren. Zusätzlich wird das analysierte Sensorsignal gespeichert und ausgefiltert, so dass ein derartiges Sensorsignal im nächsten Verarbeitungsschritt nicht mehr beachtet werden muss. Dies ist insbesondere dann von Vorteil, wenn das ausgefilterte Signal durch Stöße auf die Karosserie aufgrund von Fahrbahnunebenheiten und einem schlechten Fahrbahnbelag resultiert.

Anschließend wird die Überwachung der Motorgeschwindigkeit entsprechend Schritt S2 fortgesetzt.

## Patentansprüche

1. Verfahren zum Einklemmschutz für ein motorbetriebenes Schließsystem, umfassend die folgenden Schritte:
- **In einem ersten Schritt** Erkennen einer reduzierten Motorgeschwindigkeit **(S3);**
- **Daraufhin** Ausschalten des Motors **(S4);**
- **Danach** Analysieren eines Sensorsignals zum Erkennen einer Einklemmsituation **(S4);**
- Entscheiden, ob eine Einklemmsituation vorliegt (S5);
- Und Steuern des Motors in Abhängigkeit des Erkennens einer Einklemmsituation,
**wobei die Drehrichtung des Motors umgekehrt und die Motorgeschwindigkeit erhöht wird, wenn erkannt wird, dass ein Objekt in dem Schließsystem eingeklemmt ist (S6).**

2. Verfahren nach Anspruch 1, **dadurch gekennzeichnet, dass** eine Einklemmsituation innerhalb einer vorbestimmten Zeitperiode (tdec) erkannt wird.

3. Verfahren nach Anspruch 2, **dadurch gekennzeichnet, dass** die Zeitperiode (tdec) kleiner ist als eine Zeitperiode (tstop), in der der Motor nach dem Ausschalten zum Stillstand kommt.

4. Verfahren nach einem der vorhergehenden Ansprüche, **dadurch gekennzeichnet, dass** zum Erkennen einer Einklemmsituation die Drehzahl des Motors erfasst und ausgewertet wird.

5. Verfahren nach einem der vorhergehenden Ansprüche, **dadurch gekennzeichnet, dass** zum Erkennen einer Einklemmsituation das Sensorsignal eines Überwachungssensors ausgewertet wird.

6. Verfahren nach einem der vorhergehenden Ansprüche, **dadurch gekennzeichnet, dass die Motordrehzahl mittels Hallsensoren oder durch die Messung des Motorstroms erfasst wird.**

7. Verfahren nach den Ansprüchen 1 bis 5, **dadurch gekennzeichnet, dass** der Motor wieder eingeschaltet wird und mit der gleichen Drehrichtung betrieben wird, wenn erkannt wird, dass kein Objekt in dem Schließsystem eingeklemmt ist **(S7)**.

8. Verfahren nach Anspruch 7, **dadurch gekennzeichnet, dass** das analysierte Sensorsignal ausgefiltert wird **(S7)**.

9. Verfahren nach einem der vorhergehenden Ansprüche, **dadurch gekennzeichnet, dass** bei der Erkennung der Einklemmsituation die Kennlinie **(2)** der Motorabschaltung berücksichtigt wird.

10. Vorrichtung zur Erkennung von Einklemmsituationen, umfassend einen Motor, eine Erkennungseinheit, eine Steuereinheit und wenigstens einen Sensor, wobei die Vorrichtung eingerichtet ist zur Ausführung des Verfahrens nach einem der vorhergehenden Ansprüche.

11. Vorrichtung nach Anspruch 10, **dadurch gekennzeichnet, dass** der Motor als Antrieb für eine Fensterhebe- oder Schiebedach- oder Heckklappenvorrichtung in Kraftfahrzeugen vorgesehen ist.

## Claims

1. Method for trapping prevention for a motor-operated closing system, comprising the following steps:
- identifying a reduced motor speed in a first step (S3) ;
- then switching off the motor (S4);
- then analysing a sensor signal for identifying a trapping situation (S4);
- deciding whether there is a trapping situation (S5);
- and controlling the motor depending on a trapping situation being identified,
wherein the rotation direction of the motor is reversed and the motor speed is increased if it is identified that an object is trapped in the closing system (S6).

2. Method according to Claim 1, **characterized in that** a trapping situation is identified within a predefined time period (tdec).

3. Method according to Claim 2, **characterized in that** the time period (tdec) is shorter than a time period (tstop) in which the motor comes to a stop after being switched off.

4. Method according to one of the preceding claims, **characterized in that** the rotation speed of the motor is recorded and evaluated in order to identify a trapping situation.

5. Method according to one of the preceding claims, **characterized in that** the sensor signal from a monitoring sensor is evaluated in order to identify a trapping situation.

6. Method according to one of the preceding claims, **characterized in that** the motor rotation speed is recorded by means of Hall sensors or by measuring the motor current.

7. Method according to Claims 1 to 5, **characterized in that** the motor is switched on again and is operated with the same rotation direction if it is identified that no object is trapped in the closing system (S7).

8. Method according to Claim 7, **characterized in that** the analysed sensor signal is filtered out (S7).

9. Method according to one of the preceding claims, **characterized in that** the characteristic curve (2) of the motor cut-off is taken into account when identifying the trapping situation.

10. Apparatus for identifying trapping situations, comprising a motor, an identification unit, a control unit and at least one sensor, wherein the apparatus is designed to execute the method according to one of the preceding claims.

11. Apparatus according to Claim 10, **characterized in that** the motor is provided as a drive for a window-winder or sliding-roof or tailgate apparatus in motor vehicles.

## Revendications

1. Procédé d'antiblocage pour un système de fermeture commandé par un moteur, comprenant les étapes suivantes :
- dans une première étape, détection d'une vitesse réduite du moteur (S3) ;
- ensuite, coupure du moteur (S4) ;
- puis analyse d'un signal de capteur pour détecter une situation de blocage (S4) ;
- décision qu'une situation de blocage a lieu ou pas (S5) ;
- et commande du moteur en fonction de la détection d'une situation de blocage,
le sens de rotation du moteur étant inversé et la vitesse du moteur étant augmentée s'il est détecté qu'un objet est bloqué dans le système de fermeture (S6).

2. Procédé selon la revendication 1, **caractérisé en ce qu'**une situation de blocage est détectée pendant un intervalle de temps prédéterminé (tdec).

3. Procédé selon la revendication 2, **caractérisé en ce que** l'intervalle de temps (tdec) est inférieur à un intervalle de temps (tstop) durant lequel le moteur parvient à l'arrêt après la coupure.

4. Procédé selon l'une quelconque des revendications précédentes, **caractérisé en ce que** le régime du moteur est détecté et analysé pour détecter une situation de blocage.

5. Procédé selon l'une quelconque des revendications précédentes, **caractérisé en ce que** le signal de capteur est analysé par un capteur de surveillance pour détecter une situation de blocage.

6. Procédé selon l'une quelconque des revendications précédentes, **caractérisé en ce que** le régime du moteur est détecté au moyen de capteur de Hall ou par la mesure du courant du moteur.

7. Procédé selon les revendications 1 à 5, **caractérisé en ce que** le moteur est à nouveau allumé et est entraîné dans le même sens de rotation que lorsque l'on détecte qu'aucun objet n'est bloqué dans le système de fermeture (S7).

8. Procédé selon la revendication 7, **caractérisé en ce que** le signal de capteur analysé est filtré (S7).

9. Procédé selon l'une quelconque des revendications précédentes, **caractérisé en ce qu'**à la détection de la situation de blocage, la courbe caractéristique (2) de coupure du moteur est prise en compte.

10. Dispositif de détection de situations de blocage, comprenant un moteur, une unité de détection, une unité de commande et au moins un capteur, le dispositif étant prévu pour mettre en oeuvre le procédé selon l'une quelconque des revendications précédentes.

11. Dispositif selon la revendication 10, **caractérisé en ce que** le moteur est prévu en tant qu'entraînement pour un dispositif de lève-glace ou un dispositif de toit ouvrant ou un dispositif de hayon arrière dans des véhicules automobiles.
